# EUROPÄISCHE PATENTSCHRIFT

(11) **EP 2 041 985 B1**
(45) Veröffentlichungstag und Bekanntmachung des Hinweises auf die Patenterteilung: **30.12.2009**
(21) Anmeldenummer: 07764856.6
(22) Anmeldetag: 26.06.2007
(51) Int. Cl.: H04W 4/12

(54) **Verfahren und Einrichtung zur Weiterleitung von Kurznachrichten in GSM-UMTS Mobilfunknetzen**
Method and device for forwarding short messages in GSM/UMTS mobile radio networks
Procédé et dispositif pour transférer des messages courts dans des réseaux de téléphonie mobile GSM/UMTS

(30) Priorität: 10.07.2006 DE 102006032032
(43) Veröffentlichungstag der Anmeldung: 01.04.2009
(73) Patentinhaber: T-Mobile International AG, 53227 Bonn (DE)
(72) Erfinder: FUCHSHUBER, Michael, David, A-1120 Wien (AT); LIEBHART, Rudolf-Michael, A-1040 Wien (AT); SCHANDL, Daniel, A-3193 St. Aegyd (AT)
(74) Vertreter: Riebling, Peter
(86) Internationale Anmeldenummer: PCT/EP2007/005630
(87) Internationale Veröffentlichungsnummer: WO 2008/006462

(56) Entgegenhaltungen:
- EP-A- 1 432 255
- WO-A-01/22751
- DE-A1- 10 303 161

## Beschreibung

Die Erfindung betrifft ein Verfahren und eine Einrichtung zur Weiterleitung von Kurznachrichten in GSM-/UMTS-Mobilfunknetzen.

Eine Rufweiterleitung für Sprachanrufe zählt zu einer Standardfunktionalität von GSM (Global System for Mobile Communications) und UMTS (Universal Mobile Telecommunication System) Netzen. Eine Weiterleitung von Kurznachrichten (Short Messages - SMS) ist jedoch in der Praxis bisher nicht möglich, jedoch in vielen Fällen wünschenswert.

Derzeit existente Ansätze zur Umleitung von Kurznachrichten sind beispielsweise in den Schriften DE 103 24 636 A1, DE 101 17 051 A1 oder US 2002/0090936 A1 beschrieben. Die hierin offenbarten Verfahren erfordern Änderungen von diversen Netzwerkelementen bzw. Schnittstellen, wodurch bei der Bereitstellung dieser Funktionalität ein erheblicher Ressourcenaufwand in Bezug auf Kosten, Implementierungszeit, personellen Aufwand, etc., nötig ist.

WO 01/22751 A1 offenbart ein Verfahren zur Weiterleitung von Kurznachrichten von einem Sender an eine Zielrufnummer eines Empfängers in GSM-/UMTS Mobilfunknetzen. Die Zielrufnummer des Empfängers wird vor einer Ermittlung der für die Zustellung der Kurznachricht benötigten Routinginformationen durch eine Weiterleitungsrufnummer ersetzt, wonach die Ermittlung der Routinginformationen und eine Zustellung der Kurznachricht anhand der Weiterleitungsrufnummer erfolgt. Zur Bereitstellung dieser Funktion wird ein hierfür eingerichtetes Netzelement des Mobilfunknetzes verwendet.

Die Aufgabe der Erfindung besteht darin, ein Verfahren und eine Einrichtung zur Weiterleitung von Kurznachrichten in GSM-/UMTS Mobilfunknetzen anzugeben, die sich durch ihre einfache Implementierung auszeichnen.

Diese Aufgabe wird erfindungsgemäß durch die Merkmale der unabhängigen Ansprüche gelöst, auf deren Wortlaut an dieser Stelle Bezug genommen wird.

Bevorzugte Ausgestaltungen und weitere vorteilhafte Merkmale der Erfindung sind in den abhängigen Ansprüchen angegeben, auf deren Wortlaut an dieser Stelle Bezug genommen wird.

Die erfindungsgemäße Lösung ist durch die Verwendung von ITU-T standardisierten Schnittstellen charakterisiert. Mit anderen Worten wird ein Verfahren vorgestellt, das die Nutzung der bekannten und bewährten Sprachfunktionalität, die Rufweiterleitung, auch für den Short Message Service (SMS) erlaubt. Erfindungsgemäß werden zur Realisierung des Verfahrens ausschließlich standardisierte Schnittstellen und Nachrichten (Protokolle) verwendet werden, wodurch eine nahtlose und kostengünstige Integration in ein bestehendes GSM-UMTS-Netzwerk möglich ist.

Erfindungsgemäß wird die Weiterleitungsfunktionalität in einem separaten Serviceknoten implementiert, welcher im Wesentlichen aus drei modularen Funktionsblöcken besteht: Interaktionsfunktion, Übersetzungsfunktion und Verrechnungsfunktion. Diese Funktionsblöcke gewährleisten eine einfache Einbindung des Serviceknotens in eine bestehende Netzwerkarchitektur und die Bereitstellung der erforderlichen Funktionen für das Eingreifen in den SMS Nachrichtenfluss, sowie für die Einrichtung des Dienstes (Provisionierung) und die Vergebührung.

Gegenüber den bereits bestehenden Lösungsansätzen zeichnet sich das erfindungsgemäße Verfahren durch folgende Merkmale und Vorteile aus:
- Es besteht keine Notwendigkeit zur Adaptierung von standardisierten Schnittstellen, insbesondere Message Application Part - MAP, und Komponenten des Mobilfunknetzes, insbesondere den Mobilvermittlungsstellen (Mobile Switching Center - MSC) oder dem Heimatregister (Home Location Register - HLR, wodurch eine rasche und kostengünstige Implementierung und Inbetriebnahme erfolgen kann.
- Die Provisionierung der für die SMS Weiterleitung notwendigen SMS Profildaten erfolgt im Service Knoten und getrennt von den Sprach-Profildaten, die üblicherweise im Heimatregister HLR vorgehalten werden. Somit ist keine Ergänzung oder Änderung der vorhandenen Sprach-Profidaten im HLR erforderlich.
- Die Vergebührung der SMS Weiterleitung erfolgt separat zur bestehenden SMS Vergebührung und bietet dadurch mehr Flexibilität bezüglich Tarifierung und Implementierung des Dienstes.
- Die Weiterleitung entspricht einem aus der herkömmlichen Anrufweiterleitung bekannten CFU (Call Forwarding Unconditional), d.h. einer unbedingte Umleitung ohne Berücksichtigung des Teilnehmerstatus, z.B. ausgebucht, nicht erreichbar, und ist somit einfach anzuwenden.
- Die Weiterleitung von Kurznachrichten erfolgt vorzugsweise auf eine definierte Einzelrufnummer. SMS-Verteilung bzw. ein sogenanntes "hunting" werden hier nicht berücksichtigt und tragen somit zu einer geringeren Komplexität der Lösung bei.

Selbstverständlich kann das erfindungsgemäße Verfahren auch für die Weiterleitung von sogenannten EMS Nachrichten (Enhanced Message Service) und MMS Nachrichten (Multimedia Messaging Service) verwendet werden.

Ein Ausführungsbeispiel der Erfindung wird nun anhand der Zeichnungen näher erläutert.

Figur 1 zeigt den erfindungsgemäßen Ablauf einer SMS Weiterleitung.

Figur 2 zeigt die Provisionierung der SMS Weiterleitung durch den Benutzer.

Der Kern der Erfindung besteht in der Einrichtung eines eigenen Serviceknotens 10 für den Dienst der SMS Weiterleitung. Der Serviceknoten 10 als zentrales Element ist beispielsweise als Servercomputer in das Mobilfunknetz eingebunden und beinhaltet folgende Funktionalitäten:

### Interaktionsfunktion:

Die Interaktionsfunktion 12 ist zuständig für die Kommunikation des Serviceknotens zu externen Einheiten für Provisionierung und Eventabhandlung, z.B. die Kommunikation mit dem Heimatregister HLR 20 und den Mobilvermittlungsstellen MSC 22. Hierzu ist die Unterstützung des SS7 Protokoll MAP in Version 2 notwendig.

### Übersetzungsfunktion:

Die Übersetzungsfunktion 14 ist zuständig für die Bestimmung und Änderung der Weiterleitungsrufnummer in Abhängigkeit von der gewählten Zielrufnummer und optional von der Rufnummer des rufenden Teilnehmers. Für jeden Teilnehmer, der den Dienst einer SMS Weiterleitung in Anspruch nehmen möchte, wird in einer Teilnehmer abhängigen Datenbasis dessen Teilnehmerrufnummer und eine vom Teilnehmer eingerichtete Weiterleitungsrufnummer gespeichert, an welche die SMS weiter geleitet werden soll. Die Datenbasis kann intern im Serviceknoten 10 installiert werden, oder extern angebunden sein.

### Verrechnungsfunktion:

Die Verrechnungsfunktion 16 ist zuständig für die Verrechnung im Falle der Provisionierung und der Kurzmitteilungsweiterleitung, z.B. Erstellen von Tickets, Online-Verrechnung via Camel Application Part (CAPvS) im Falle von Prepaid.

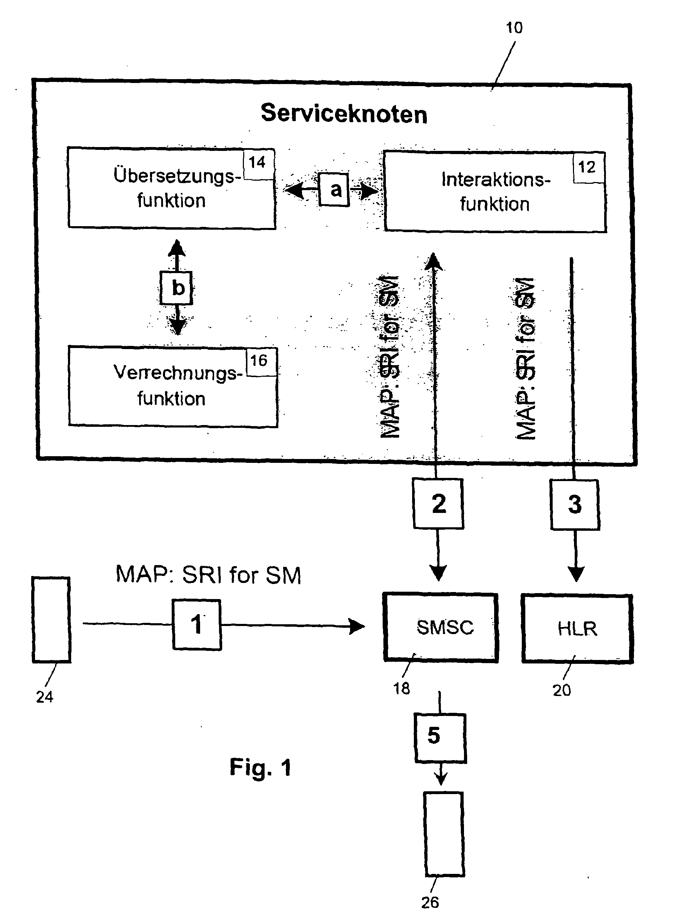

Figur 1 erläutert das Verfahren zur Weiterleitung von SMS Nachrichten mittels Rufnummernumsetzung in einem Mobilfunknetz. Auf einem hierfür geeigneten Endgerät 24), beispielsweise einem Mobiltelefon, wird eine Kurznachricht SMS erzeugt. Diese Kurznachricht soll an ein Endgerät 26 eines Empfängers übermittelt werden. Die SMS wird über das Mobilfunknetz zunächst an eine SMS Zentrale 18, auch Short Message Service Center (SMSC) genannt, übermittelt und dort zwischengespeichert, Nachricht 1. Mittels eines MAP Befehls "SRI for SM" (Send Routing Info for Short Message), welcher standardmäßig von der SMS Zentrale SMSC 18 zum Heimatregister HLR 20 gesendet wird, fragt das SMSC 18 das HLR 20 nach dem Aufenthaltsort (Routinginformationen) des Empfängers. Erfindungsgemäß erfolgt nun ein Eingriff in die Standard SMS Zustellungsabarbeitung zwischen dem SMSC 18 und dem HLR 20. Die Nachricht SRI for SM wird vom SMSC 18 nicht direkt an das HLR 20 sondern vom SMSC 18 an die Interaktionsfunktion 12 des Serviceknotens 10 übermittelt, Nachricht 2. Die Übersetzungsfunktion prüft, ob für die Zielrufnummer gegebenenfalls eine Weiterleitungsrufnummer eingerichtet ist. Ist das der Fall, wird die Zielrufnummer durch die Übersetzungsfunktion in die Weiterleitungsrufnummer abgeändert und die Routinganfrage mit geänderter Zielrufnummer an das zuständige HLR 20 weiterleitet, Nachricht 3. Das HLR 20 ermittelt die zu der Weiterleitungsrufnummer gehörenden Routinginformationen und gibt diese Informationen an den Serviceknoten 10 zurück, der diese an das SMSC 18 weiterleitet. Anhand dieser Routinginformationen kann das SMSC 18 die Kurznachricht nun an die Weiterleitungsrufnummer bzw. das zugehörige Endgerät 26 übermitteln, Nachricht 5. Erforderliche Änderungen für die Implementierung dieser Funktion betreffen ausschließlich die Routing-Logiken in den beteiligten Netzelementen des Mobilfunknetzes.

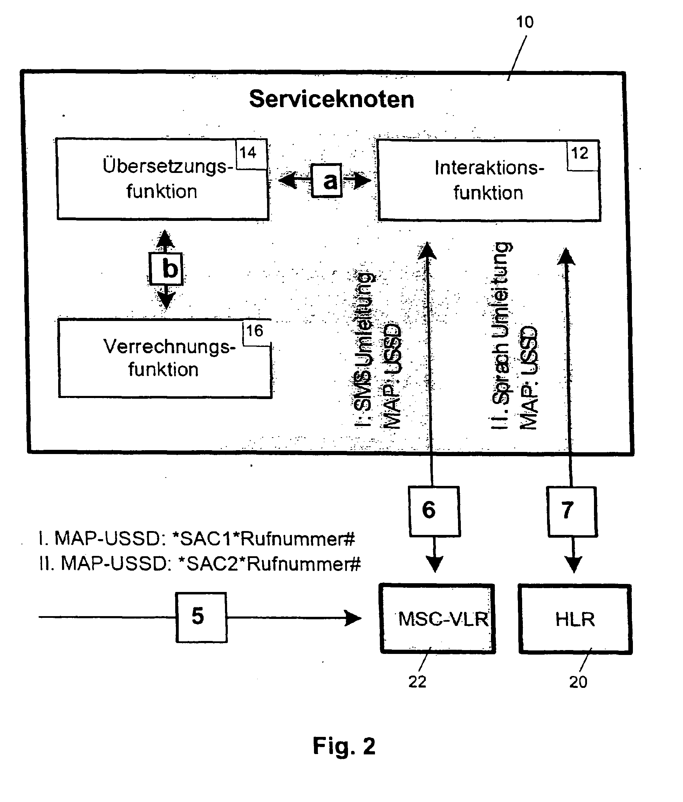

Wie in Figur 2 illustriert erfolgt die Administration des Dienstes für die Weiterleitung von Kurznachrichten mittels USSD (Unstructured Supplementary Services Data). Mit netzspezifischen USSD-Codes können Komfort- und Servicefunktionen im Mobilfunknetz abgefragt oder gesteuert werden. Jeder Netzbetreiber kann die Codes für sein Netz frei definieren. Nach Eingabe des entsprechenden USSD-Codes am Mobiltelefon und drücken der Verbindungstaste erscheint im Display eine Status- oder Text-Meldung mit den gewünschten Informationen. USSD wird erfindungsgemäß zur Steuerung der Funktionen des Serviceknotens 10 eingesetzt. Weitere Administrationsmöglichkeiten sind natürlich zusätzlich möglich, z.B. über ein Internetportal.

Zwei Szenarien zur Provisionierung der Weiterleitungsrufnummer werden hier erläutert. Eine Unterscheidung ist anhand des USSD Identifiers (SAC1 oder SAC2) gegeben:
1. Es wird nur die SMS Weiterleitungsnummer im Serviceknoten 10 provisioniert bzw. geändert:
   Nach der Validierung durch die Interaktionsfunktion (nach A-Party, Netzzugehörigkeit, ...) wird die Weiterleitungs-Rufnummer in der Übersetzungsfunktion 14 gespeichert, Nachrichten 5 und 6.
2. Es wird die SMS Weiterleitungsnummer und die Sprach-Weiterleitungsnummer provisioniert bzw. geändert:
   Nach der Provisionierung der SMS Weiterleitungsnummer im Serviceknoten 10, wie unter Punkt 1, wird der USSD Identifer (SAC1 und SAC2) auf den GSM Standardwert geändert (auf **21*Rufnummer#) und dann von der Interaktionsfunktion 12 an das HLR 20 weitergeleitet, um so eine gleichzeitige Provisionierung der Sprachumleitungsnummer zu gewährleisten, Nachrichten 5, 6 und 7.

### Liste der Bezugszeichen

- 1: Nachrichtenübermittlung
- 2: Nachrichtenübermittlung
- 3: Nachrichtenübermittlung

- 5: Nachrichtenübermittlung
- 6: Nachrichtenübermittlung
- 7: Nachrichtenübermittlung

- 10: Serviceknoten
- 12: Interaktionsfunktion
- 14: Übersetzungsfunktion
- 16: Verrechnungsfunktion
- 18: Kurznachrichtenzentrale SMSC
- 20: Heimatregister HLR
- 22: Mobilvermittlungsstelle MSC, Besucherregister VLR
- 24: Endgerät (Sender)
- 26: Endgerät (Empfänger)

## Patentansprüche

1. Verfahren zur Weiterleitung von Kurznachrichten von einem Sender an eine Zielrufnummer eines Empfängers in GSM-/UMTS
Mobilfunknetzen, wobei die Zielrufnummer des Empfängers vor einer Ermittlung der für die Zustellung der Kurznachricht benötigten Routinginformationen durch eine Weiterleitungsrufnummer ersetzt wird, wonach die Ermittlung der Routinginformationen und eine Zustellung der Kurznachricht anhand der Weiterleitungsrufnummer erfolgt, **dadurch gekennzeichnet,**
**dass** ein Serviceknoten (10) in den Signalisierungspfad zwischen einer Kurznachrichtenzentrale (18) und einem Heimatregister (20) eingebunden ist, der die in einer standardisierten MAP-Abfrage enthaltene Zielrufnummer "Send Routing Info for Short Message"
durch eine Weiterleitungsrufnummer ersetzt, wonach die MAP-Abfrage mit der Weiterleitungsrufnummer fortgesetzt wird.

2. Verfahren nach Anspruch 1, **dadurch gekennzeichnet, dass** die Weiterleitungsrufnummer zusammen mit der Zielrufnummer des Empfängers in einer Datenbasis gespeichert wird.

3. Verfahren nach einem der vorhergehenden Ansprüche, **dadurch gekennzeichnet, dass** basierend auf der Zielrufnummer eine Abfrage der Weiterleitungsrufnummer aus der Datenbasis durch die MAP-Abfrage" Send Routing Info for Short Message" initiiert wird.

4. Verfahren nach einem der vorhergehenden Ansprüche, **dadurch gekennzeichnet, dass** eine Provisionierung des Dienstes der Weiterleitung der Kurznachricht durch den Teilnehmer mittels USSD Nachrichten durchführbar ist.

5. Verfahren nach einem der vorhergehenden Ansprüche, **dadurch gekennzeichnet, dass** eine Vergebührung des Dienstes der Weiterleitung der Kurznachricht separat zu einer bestehenden Kurznachrichtenvergebührung erfolgt.

6. Einrichtung zur Weiterleitung von Kurznachrichten von einem Sender an eine Zielrufnummer eines Empfängers in GSM-/UMTS Mobilfunknetzen, **gekennzeichnet durch** einen Serviceknoten (10), der in den Signalisierungspfad zwischen einer Kurznachrichtenzentrale (18) und einem Heimatregister (12) eingebunden ist, und in welchem die in einer standardisierten MAP-Abfrage enthaltene Zielrufnummer "Send Routing Info for Short Message" des Empfängers **durch** eine Weiterleitungsrufnummer ersetzt wird, wonach eine Weiterleitung der Kurznachricht an die Weiterleitungsrufnummer erfolgt.

7. Einrichtung nach Anspruch 6, **gekennzeichnet durch** eine Interaktionsfunktion (12), zur Kommunikation des Serviceknotens (10) mit externen Einheiten und für eine Provisionierung und Eventabhandlung.

8. Einrichtung nach einem der Ansprüche 6 oder 7, **gekennzeichnet durch** eine Übersetzungsfunktion (14) verbunden mit einer Datenbasis zur Bestimmung der Weiterleitungsrufnummer abhängig von der gewählten Zielrufnummer.

9. Einrichtung nach einem der Ansprüche 6 bis 8, **gekennzeichnet durch** eine Verrechnungsfunktion (16) für die Verrechnung des Dienstes der Weiterleitung der Kurznachricht.

10. Datenverarbeitungsprogramm mit einem Programmcode, der auf einer Datenverarbeitungseinrichtung ausgeführt ein Verfahren nach einem der Ansprüche 1 bis 5 durchführt.

11. Daten verarbeitungsprogrammprodukt, das einen auf einer Datenverarbeitungseinrichtung ausführbaren Programmcode zur Durchführung des Verfahrens nach einem der Ansprüche 1 bis 5 umfasst.

## Claims

1. Process for forwarding short messages from a transmitter to a target call number of a receiver in GSM-/UMTS mobile telephony networks, wherein the target call number of the receiver is replaced with a forwarding call number before determining the routing information required for delivery of the short message, after which determination of the routing information and delivery of the short message is effected using the forwarding call number, **characterised in that** a service node (10) is integrated in the signalling path between a short message centre (18) and a home register (20) which replaces the target call number present in a standardised MAP interrogation "Send Routing Info for Short Message" with a forwarding call number, after which the MAP interrogation is continued with the forwarding call number.

2. Process according to claim 1, **characterised in that** the forwarding call number is stored in a database together with the target call number of the receiver.

3. Process according to one of the preceding claims, **characterised in that** based on the target call number, a interrogation of the forwarding call number from the database is initiated by the MAP interrogation "Send Routing Info for Short Message".

4. Process according to one of the preceding claims, **characterised in that** provisioning of the service of forwarding the short message can be carried out by the subscriber by means of USSD messages.

5. Process according to one of the preceding claims, **characterised in that** charging of the service of forwarding the short message is effected separately to existing short message charging.

6. Device for forwarding short messages from a transmitter to a target call number of a receiver in GSM-/UMTS mobile telephony networks,
**characterised by** a service node (10), which is integrated in the signalling path between a short message centre (18) and a home register (12), and in which the target call number present in a standardised MAP interrogation "Send Routing Info for Short Message" of the receiver is replaced with a forwarding call number, after which forwarding of the short message to the forwarding call number is effected.

7. Device according to claim 6, **characterised by** an interaction function (12) for communication of the service node (10) with external units and for provisioning and event discourse.

8. Device according to one of claims 6 or 7, **characterised by** a translation function (14) connected to a database for determining the forwarding call number depending on the dialled target call number.

9. Device according to one of claims 6 to 8, **characterised by** a billing function (16) for billing the service of forwarding the short message.

10. Data-processing program having a program code which carries out a process according to one of claims 1 to 5 executed on a data-processing device.

11. Data-processing program product which comprises a program code which can be executed on a data-processing device for carrying out the process according to one of claims 1 to 5.

## Revendications

1. Procédé pour le transfert de messages courts d'un expéditeur vers un numéro d'appel cible d'un destinataire dans des réseaux de téléphonie mobile GSM/UMTS, selon lequel le numéro d'appel cible du destinataire est remplacé, avant une recherche des informations d'acheminement nécessaires à la remise du message court, par un numéro d'appel de transfert, après quoi la recherche des informations d'acheminement et une remise du message court ont lieu à l'aide du numéro d'appel de transfert,
**caractérisé en ce qu'**il est prévu, intégré dans la trajectoire de signalisation entre un central de messages courts (18) et un enregistreur de localisation nominal (20), un noeud de services (10) qui remplace par un numéro d'appel de transfert le numéro d'appel cible "Envoyer infos d'acheminement pour message court" contenu dans une interrogation MAP normalisée, après quoi l'interrogation MAP se poursuit avec le numéro d'appel de transfert.

2. Procédé selon la revendication 1, **caractérisé en ce que** le numéro d'appel de transfert est mis en mémoire dans une base de données avec le numéro d'appel cible du destinataire.

3. Procédé selon l'une des revendications précédentes, **caractérisé en ce que** sur la base du numéro d'appel cible, une interrogation du numéro d'appel de transfert est lancée dans la base de données par l'interrogation MAP "envoyer infos d'acheminement pour message court".

4. Procédé selon l'une des revendications précédentes, **caractérisé en ce qu'**une activation du service du transfert du message court peut être effectuée par l'abonné à l'aide de messages USSD.

5. Procédé selon l'une des revendications précédentes, **caractérisé en ce qu'**une facturation du service du transfert du message court est réalisée séparément par rapport à une facturation de messages courts existante.

6. Dispositif pour le transfert de messages courts d'un expéditeur vers un numéro d'appel cible d'un destinataire dans des réseaux de téléphonie mobile GSM/UMTS, **caractérisé par** un noeud de services (10) qui est intégré dans la trajectoire de signalisation entre un central de messages courts (18) et un enregistreur de localisation nominal (12) et dans lequel le numéro d'appel cible "Envoyer infos d'acheminement pour message court" du destinataire contenu dans une interrogation MAP normalisée est remplacé par un numéro d'appel de transfert, après quoi un transfert du message court vers le numéro d'appel de transfert a lieu.

7. Dispositif selon la revendication 6, **caractérisé par** une fonction d'interaction (12) pour la communication du noeud de services (10) avec des unités externes et pour une activation et un traitement des événements.

8. Dispositif selon l'une des revendications 6 ou 7, **caractérisé par** une fonction de conversion (14) liée à une base de données pour définir le numéro d'appel de transfert en fonction du numéro d'appel cible composé.

9. Dispositif selon l'une des revendications 6 à 8, **caractérisé par** une fonction de facturation (16) pour la facturation du service du transfert du message court.

10. Programme informatique avec un code de programme qui, exécuté sur un dispositif informatique, met en oeuvre un procédé selon l'une des revendications 1 à 5.

11. Programme informatique qui comprend un code de programme apte à être exécuté sur un dispositif informatique pour la mise en oeuvre du procédé selon l'une des revendications 1 à 5.
